# EUROPÄISCHE PATENTSCHRIFT

(11) **EP 3 705 905 B1**
(45) Veröffentlichungstag und Bekanntmachung des Hinweises auf die Patenterteilung: **02.11.2022**
(21) Anmeldenummer: 19160757.1
(22) Anmeldetag: 05.03.2019
(51) Int. Cl.: G01S 7/481, G01S 7/4863, G01S 7/4914, G01S 17/42, G01S 17/931, G01S 7/499

(54) **VORRICHTUNG ZUM ERKENNEN VON OBJEKTEN SOWIE FAHRZEUG**
VEHICLE AND DEVICE FOR DETECTING OBJECTS
DISPOSITIF DE DÉTECTION DES OBJETS AINSI QUE VÉHICULE

(43) Veröffentlichungstag der Anmeldung: 09.09.2020
(73) Patentinhaber: Hybrid Lidar Systems AG, 31162 Bad Salzdetfurth (DE)
(72) Erfinder: ELTAHER, Amr, 38126 Braunschweig (DE)
(74) Vertreter: Manitz Finsterwald Patent- und Rechtsanwaltspartnerschaft mbB

(56) Entgegenhaltungen:
- WO-A2-2017/184336
- DE-A1-102015 110 141
- DE-A1-102015 222 061
- US-A1- 2018 052 234
- US-A1- 2018 203 102

## Beschreibung

Die vorliegende Erfindung betrifft eine Vorrichtung zum Erkennen von Objekten nach dem Oberbegriff des Anspruchs 1 (US 2017/307736 A1). Ferner betrifft die vorliegende Erfindung ein Fahrzeug mit einer Vorrichtung zum Erkennen von Objekten in einer Überwachungsumgebung.

Auf Licht basierende Vorrichtungen zum Erkennen von Objekten in Überwachungsumgebungen sind grundsätzlich bekannt. Ein Einsatzgebiet von derartigen Vorrichtungen ist beispielsweise in Fahrzeugen, wobei hier durch diese Vorrichtungen beispielsweise eine Messung von Abständen von Objekten in der Umgebung des Fahrzeugs zum Fahrzeug bereitgestellt werden können. Insbesondere können somit derartige Vorrichtungen zum Erkennen von Objekten zu einer Datengrundlage für autonom durchgeführtes Führen eines Fahrzeugs beitragen. Bekannte Vorrichtungen zum Erkennen von Objekten weisen dabei eine Lichtquelle, zumeist eine einzelne Lichtquelle, auf, durch die Licht in die Umgebung ausgesandt wird. An Objekten reflektiertes Licht gelangt zu den Vorrichtungen zurück, wird in diesen beziehungsweise durch diese registriert und zur Ermittlung bzw. zum Erkennen von Objekten in der entsprechenden Überwachungsumgebung verwendet.

Weitere Vorrichtungen zum Erkennen von Objekten in einer Überwachungsumgebung sind aus der DE 10 2015110 141 A1, der US 2018/052234 A1 der WO 2017/184336 A2 und der US 2018/203102 A1 bekannt. Aus der DE 10 2015 222 061 A1 ist es bekannt, eine Infrarotquelle und eine Quelle im sichtbaren Bereich zu kombinieren.

Es ist Aufgabe der vorliegenden Erfindung, Vorrichtungen zum Erkennen von Objekten in einer Überwachungsumgebung sowie Fahrzeuge grundsätzlich zu verbessern. Insbesondere ist es Aufgabe der vorliegenden Erfindung, eine Vorrichtung zum Erkennen von Objekten in einer Überwachungsumgebung sowie ein Fahrzeug bereitzustellen, die dahingehend verbessernd sind, dass eine getrennte aber auch bezüglich Wetter robuste Erkennung möglich ist.

Voranstehende Aufgabe wird durch eine Vorrichtung mit den Merkmalen des Anspruchs 1 sowie durch ein Fahrzeug mit den Merkmalen des Anspruchs 15 gelöst. Sämtliche Merkmale und Vorteile, die in Bezug auf eine erfindungsgemäße Vorrichtung beschrieben werden, können auch durch ein erfindungsgemäßes Fahrzeug bereitgestellt werden und umgekehrt, so dass auf die einzelnen Erfindungsaspekte jeweils wechselseitig Bezug genommen wird beziehungsweise werden kann. Weitere optionale Merkmale und Vorteile der Erfindung ergeben sich aus den Unteransprüchen, der Beschreibung und den Zeichnungen.

Eine erfindungsgemäße Vorrichtung ist zum Erkennen von Objekten in einer Überwachungsumgebung ausgebildet, wobei durch eine erfindungsgemäße Vorrichtung für diesen Zweck Licht eingesetzt wird. Bevorzugt kann dieses Licht als Laserlicht ausgebildet sein, wobei hier insbesondere die vorteilhaften Eigenschaften von Laserlicht zum Beispiel hinsichtlich einer Fokussierbarkeit, einer Wellenlängenstabilität und/oder einer Phasenstabilität ausgenutzt werden können. Als Licht im Sinne der Erfindung werden insbesondere sichtbares Licht, das heißt elektromagnetische Strahlung mit einer Wellenlänge zwischen etwa 400 nm und etwa 800 nm, aber auch daran angrenzende Bereiche des elektromagnetischen Spektrums wie beispielsweise UV-Licht und/oder Infrarotlicht verstanden.

Zum Erkennen von Objekten in der Überwachungsumgebung wird das Licht durch einen Sendeabschnitt der erfindungsgemäßen Vorrichtung ausgesendet, an einem Objekt in der Überwachungsumgebung reflektiert und anschließend von einem Empfangsabschnitt der erfindungsgemäßen Vorrichtung wieder empfangen. In weiteren möglichen Elementen der erfindungsgemäßen Vorrichtung, beispielsweise einer Auswerteeinheit, können die ermittelten Daten des Empfangsabschnitts analysiert und auf diese Weise das Objekt in der Überwachungsumgebung erkannt werden. Alternativ oder zusätzlich kann diese Analyse der Daten auch außerhalb von der erfindungsgemäßen Vorrichtung in zusätzlichen externen Auswerteeinheiten vorgenommen werden.

Der Sendeabschnitt weist eine erste Sendeeinheit und zumindest eine zweite Sendeeinheit auf. Die zumindest zwei Sendeeinheiten können beispielsweise zumindest im Wesentlichen baugleich ausgebildet sein, wobei sie sich jedoch darin unterscheiden, welches spezielle Licht sie jeweils aussenden können. Sie können hierfür insbesondere auch als jeweils eine eigene Baugruppe ausgebildet sein. Alternativ ist auch eine Integration der zumindest zwei Sendeeinheiten in eine einzelne Baugruppe, beispielsweise in einem gemeinsamen Gehäuse, denkbar. So sendet die erste Sendeeinheit Licht mit einer ersten Lichteigenschaft und die zweite Sendeeinheit Licht mit einer zweiten Lichteigenschaft aus. Die beiden Lichteigenschaften sind dabei unterschiedlich ausgebildet. Auf diese Weise kann insbesondere ermöglicht werden, bei einem Empfang von reflektiertem Licht, basierend auf der dessen Lichteigenschaft, eine Zuordnung des empfangenen Lichts zur jeweils entsprechenden Sendeeinheit vorzunehmen.

Ferner sind die beiden Sendeeinheiten derart konstruiert und/oder angeordnet, dass die erste Sendeeinheit ihr Licht in einen ersten Beleuchtungsabschnitt der Überwachungsumgebung und die zweite Sendeeinheit ihr Licht in einen zweiten Beleuchtungsabschnitt der Überwachungsumgebung aussendet. Mit anderen Worten wird in einer erfindungsgemäßen Vorrichtung die Überwachungsumgebung mit Licht ausgeleuchtet, das, je nach dem von welchem Sendeabschnitt es stammt, unterschiedliche Lichteigenschaften aufweist. Da das Aussenden des Lichts durch die Sendeeinheiten des Sendeabschnitts gleichzeitig erfolgt, wird die gesamte Überwachungsumgebung somit bei jeder Ausleuchtung mit Licht durch den Sendeabschnitt komplett abgedeckt. Hierbei wird jeder einzelne Unterbereich der Überwachungsumgebung, abgedeckt durch zumindest einen Beleuchtungsabschnitt, durch Licht von zumindest einer der Sendeeinheiten ausgeleuchtet.

Je nachdem, wo sich ein Objekt in der Überwachungsumgebung befindet, reflektiert es Licht von der ersten Sendeeinheit mit der ersten Lichteigenschaft und/oder Licht von der zumindest einen zweiten Sendeeinheit mit der zweiten Lichteigenschaft. Zum Empfangen dieses reflektierten Lichts weist eine erfindungsgemäße Vorrichtung einen Empfangsabschnitt mit einer Empfangseinheit auf, wobei die Empfangseinheit sowohl zum Erkennen von reflektiertem Licht mit der ersten Lichteigenschaft als auch zum Erkennen von reflektiertem Licht mit der zumindest einen zweiten Lichteigenschaft ausgebildet ist. Der Empfangsabschnitt weist eine Empfangseinheit zum gleichzeitigen Empfangen von reflektiertem Licht mit der ersten Lichteigenschaft und von reflektiertem Licht mit der zumindest zweiten Lichteigenschaft auf. Mit anderen Worten ist es für ein Erkennen des Objekts in der Überwachungsumgebung unerheblich, ob es von Licht der ersten Sendeeinheit, von Licht der zweiten Sendeeinheit oder von Licht von beiden Sendeeinheiten ausgeleuchtet wird.

Durch das Vorhandensein von zumindest zwei Sendeeinheiten, die zum gleichzeitigen Aussenden von Licht ausgebildet sind, und die Ausgestaltung der Empfangseinheit dergestalt, dass sie zum gleichzeitigen Empfangen von reflektiertem Licht mit verschiedenen Lichteigenschaften ausgebildet ist, ergeben sich mehrere Vorteile.

So kann durch das Vorhandensein von zumindest zwei Sendeeinheiten insgesamt eine Scangeschwindigkeit hinsichtlich der gesamten Überwachungsumgebung erhöht werden. Da insbesondere jede der zumindest zwei Sendeeinheiten nur den ihr zugewiesenen Beleuchtungsabschnitt und damit nur einen Teil der gesamten

Überwachungsumgebung abrastert beziehungsweise scannt, kann somit ein Scan der gesamten Überwachungsumgebung durch die zumindest zwei Sendeeinheiten insgesamt in geringerer Zeit durchgeführt werden, als bei einem Einsatz einer einzelnen Sendeeinheit. Somit kann erreicht werden, dass die Scangeschwindigkeit mit zunehmender Anzahl an Sendeeinheiten ebenfalls zunimmt, bevorzugt direkt proportional zunimmt.

Gleichzeitig kann beispielsweise der von den einzelnen Sendeeinheiten ausgeleuchtete Beleuchtungsabschnitt der Überwachungsumgebung für jede einzelne Sendeeinheit verkleinert werden, so dass auch dadurch zum einen eine Scangeschwindigkeit, das heißt die Zeit die zum Ausleuchten des gesamten Beleuchtungsabschnitts durch die jeweilige Sendeeinheit nötig ist, gesenkt werden kann und gleichzeitig auch die dafür nötige elektrische Energie reduziert werden kann. Alternativ oder zusätzlich können die einzelnen Sendeeinheiten die jeweiligen Beleuchtungsabschnitte auch mit einer höheren Auflösung scannen und/oder abtasten, so dass eine insgesamt bereitstellbare Auflösung beim Erkennen von Objekten in der Überwachungsumgebung gesteigert werden kann. Durch das Aufteilen der gesamten Überwachungsumgebung in Beleuchtungsabschnitte, die jeweils von einer separaten Sendeeinheit ausgeleuchtet werden, kann diese Erhöhung der Auflösung ohne oder zumindest ohne wesentliche Verlängerung der insgesamt für eine Ausleuchtung der Überwachungsumgebung benötigen Zeit durchgeführt werden.

Ferner ist bei einer erfindungsgemäßen Vorrichtung vorgesehen, dass die erste Lichteigenschaft und die zumindest eine zweite Lichteigenschaft als eine Farbmischung des entsprechenden Lichts ausgebildet ist. Diese Lichteigenschaft stellt eine intrinsische Eigenschaft des Lichts selbst dar. Aufwändige Zeitmodulationen von ausgesandten Lichtimpulsen, beispielsweise ein Aufprägen einer Struktur mit Sendeabschnitten und Pausenabschnitten, kann dadurch vermieden werden. Die einzelnen Sendeeinheiten können somit ihr jeweiliges Licht kontinuierlich oder zumindest im Wesentlichen kontinuierlich aussenden, wodurch beispielsweise eine Scangeschwindigkeit und/oder eine Auflösung weiter gesteigert werden können.

Eine erfindungsgemäße Vorrichtung ist dahingehend weiterentwickelt, dass die erste Lichteigenschaft und die zumindest eine zweite Lichteigenschaft als eine Farbmischung des entsprechenden Lichts ausgebildet ist, wobei eine erste Lichtfarbe, insbesondere Blau, nur als Teil der ersten Lichteigenschaft und eine zweite Lichtfarbe, insbesondere Grün, nur als Teil der zweiten Lichteigenschaft eingesetzt ist. Dabei kann bevorzugt berücksichtigt werden, dass Licht je nach seiner Lichtfarbe unterschiedliche Eigenschaften aufweisen kann. Beispielsweise kann eine Ausbreitung des Lichts von Umweltbedingungen abhängig sein, insbesondere wird zum Beispiel bei einem Auftreten von Schnee oder Regen ein langwelligeres Licht weniger stark durch Streuung abgeschwächt wie ein im Vergleich dazu kurzwelligeres Licht. Lichtfarben im Sinne der Erfindung können dabei bevorzugt als eng begrenzte Wellenlängenbänder, beispielsweise ± 25 nm, bevorzugt ± 5 nm, um einen Mittelwert bereitgestellt werden, zum Beispiel Blau um den Mittelwert von ca. 470 nm und/oder Grün um den Mittelwert von ca. 540 nm. Bei Verwendung von Laserlicht können diese Wellenlängenbänder noch enger eingegrenzt werden bis hin zu monochromatischem Licht. Dadurch, dass eine erste Lichtfarbe nur als Teil der ersten Lichteigenschaft und eine zweite Lichtfarbe nur als Teil der zweiten Lichteigenschaft eingesetzt werden, kann zum einen ein gleichzeitiges Erkennen der beiden verschiedenen Lichtarten in der Empfangseinheit des Empfangsabschnitts besonders einfach bereitgestellt werden. Gleichzeitig kann auch eine Unterscheidung der beiden Lichtarten besonders einfach ermöglicht werden. Darüber hinaus wird zusätzlich auch zumindest eine dritte Lichtfarbe, beispielsweise Rot (Mittelwert des Wellenlängenbandes bei ca. 700 nm) als Teil beider Lichteigenschaften eingesetzt. Dadurch kann beispielsweise insgesamt eine Helligkeit einer Ausleuchtung der gesamten Überwachungsumgebung verbessert und dadurch ein Erkennen von beispielsweise nur schwach reflektierenden Objekten in der Überwachungsumgebung erleichtert werden.

Bevorzugt kann eine erfindungsgemäße Vorrichtung dahingehend ausgebildet sein, dass der erste Beleuchtungsabschnitt und der zumindest eine zweite Beleuchtungsabschnitt die Überwachungsumgebung vollständig oder zumindest im Wesentlichen vollständig abdecken. Mit anderen Worten kann bevorzugt vorgesehen sein, dass eine Vereinigungsmenge des ersten Beleuchtungsabschnitts und des zumindest einen zweiten Beleuchtungsabschnitts die Überwachungsumgebung umfasst oder sogar größer als diese ausgebildet ist. Ein Erkennen von Objekten in der gesamten Überwachungsumgebung kann auf diese Weise sichergestellt werden.

Eine weiterentwickelte Ausgestaltungsform kann enthalten, dass der erste Beleuchtungsabschnitt und der zumindest eine zweite Beleuchtungsabschnitt die Überwachungsumgebung zu gleichen Teilen oder zumindest im Wesentlichen zu gleichen Teilen abdecken, wobei bevorzugt die Überwachungsumgebung einen Winkelbereich von 120° × 40° abdeckt und davon der erste Beleuchtungsabschnitt und der zweite Beleuchtungsabschnitt jeweils 60° × 40° abdecken. Mit anderen Worten kann bevorzugt vorgesehen sein, dass die Überwachungsumgebung durch die einzelnen Beleuchtungsabschnitte der Sendeeinheiten nicht nur vollständig abgedeckt wird, sondern unter diesen zu gleichen Teilen aufgeteilt ist. Jede der Sendeeinheiten sendet somit ihr Licht in einen Beleuchtungsabschnitt aus, wobei die einzelnen Beleuchtungsabschnitte aller Sendeeinheiten gleich groß sind. Eine Synchronisation dieser Beleuchtungen beziehungsweise Ausleuchtungen der einzelnen Beleuchtungsabschnitte kann somit vereinfacht werden. Bei einer bevorzugten Überwachungsumgebung in einem Winkelbereich von 120° × 40°, jeweils gemessen in Bezug auf eine mittlere Messrichtung der erfindungsgemäßen Vorrichtung, kann bei einem Vorhandensein von zwei Sendeeinheiten somit bevorzugt ein Aufteilen der beiden Beleuchtungsabschnitte in jeweils 60° × 40° vorgesehen sein.

Auch kann eine erfindungsgemäße Vorrichtung derart ausgebildet sein, dass sich der erste Beleuchtungsabschnitt und der zumindest eine zweite Beleuchtungsabschnitt nicht überlappen und/oder dass der erste Beleuchtungsabschnitt und der zumindest eine zweite Beleuchtungsabschnitt aneinander angrenzen, bevorzugt zumindest teilweise unmittelbar aneinander angrenzen. Durch eine Vermeidung eines Überlapps kann eine besonders energiesparende vollständige Ausleuchtung der gesamten Überwachungsumgebung bereitgestellt werden. Ein aneinander Angrenzen, insbesondere ein unmittelbares aneinander Angrenzen, der beiden Beleuchtungsabschnitte wiederum kann sicherstellen, dass zwischen den beiden Beleuchtungsabschnitten kein Bereich der Überwachungsumgebung verbleibt, der nicht durch einen der beiden Sendeeinheiten mit Licht ausgeleuchtet wird.

Alternativ kann vorgesehen sein, dass sich der erste Beleuchtungsabschnitt und der zumindest eine zweite Beleuchtungsabschnitt in einem Redundanzbereich überlappen, insbesondere dass der zumindest eine zweite Beleuchtungsabschnitt vollständig mit dem ersten Beleuchtungsabschnitt überlappt und so den Redundanzbereich bildet. Mit anderen Worten wird in diesem Redundanzbereich ein vorhandenes Objekt durch zumindest zwei Sendeeinheiten sowohl mit Licht mit der ersten Lichteigenschaft als auch mit Licht mit der zumindest einen zweiten Lichteigenschaft ausgeleuchtet und anschließend durch eine Registrierung des reflektierten Lichts sowohl mit der ersten Lichteigenschaft als auch mit der zumindest einen zweiten Lichteigenschaft durch die Empfangseinheit des Empfangsabschnitts erkannt. Ein Erkennen dieses Objekts kann somit zum einen mit höherer Sicherheit bereitgestellt werden, wobei gleichzeitig beispielsweise auch eine Auflösung des erkannten Objekts erhöht werden kann. Insbesondere bei einer vollständigen Überlappung des zumindest einen zweiten Beleuchtungsabschnitts mit dem ersten Beleuchtungsabschnitt kann auch ermöglicht werden, durch den ersten Beleuchtungsabschnitt eine Übersicht über die gesamte Überwachungsumgebung und darin vorhandene Objekte zu erzeugen und gleichzeitig durch den zumindest einen zweiten Beleuchtungsabschnitt eine bevorzugt detailliertere Ansicht über Ausschnitte der Überwachungsumgebung, insbesondere an vorhandene Objekte angepasste Ausschnitte, bereitzustellen.

Die beiden oben genannten Ausgestaltungsformen, aneinander angrenzende Beleuchtungsabschnitte und alternativ überlappende Beleuchtungsabschnitte, gelten jeweils zumeist für einen festen Abstand der betrachteten Überwachungsumgebung vom Empfangsabschnitt der erfindungsgemäßen Vorrichtung. Insbesondere können bei derselben Vorrichtung bei zwei oder mehreren betrachteten Überwachungsumgebungen in unterschiedlichen Abständen auch beide Varianten, sowohl nicht überlappende als auch überlappende Beleuchtungsabschnitte, gleichzeitig realisiert sein. Insbesondere können beispielsweise auch erst in einer durch die erfindungsgemäße Vorrichtung vorgenommene oder nachgeschaltete Auswertung eine oder mehrere Überwachungsumgebungen in verschiedenen Abständen zum Empfangsabschnitt festgelegt und/oder ausgewertet werden.

So kann gemäß einer weiteren Ausführungsform einer erfindungsgemäßen Vorrichtung vorgesehen sein, dass sich der erste Beleuchtungsabschnitt in einem ersten Abstand vom Empfangsabschnitt und der zumindest eine zweite Beleuchtungsabschnitt in einem zweiten Abstand vom Empfangsabschnitt angeordnet sind, wobei der erste Abstand und der zweite Abstand unterschiedlich ausgebildet sind. Mit anderen Worten kann zum Beispiel der erste Beleuchtungsabschnitt ein näher am Empfangsabschnitt angeordneter Nahbereich und der zweite Beleuchtungsabschnitt ein in weiter entfernter Fernbereich sein. Auf diese Weise kann beispielsweise durch eine erfindungsgemäße Vorrichtung bereitgestellt werden, gleichzeitig sowohl den Fernbereich als auch den Nahbereich zu überwachen. Die gesamte Überwachungsumgebung ergibt sich in dieser Ausführungsform aus den jetzt räumlich getrennten einzelnen Beleuchtungsabschnitten. Auch kann, wie oben bereits angedeutet, zum Beispiel auch durch das Licht, das zum Ausleuchten eines Fernbereichs vorgesehen ist, auch der Nahbereich zumindest teilweise ausgeleuchtet werden und umgekehrt, wobei dies bei einer durch die erfindungsgemäße Vorrichtung vorgenommene oder nachgeschaltete Auswertung berücksichtigt werden kann um beispielsweise eine Auflösung des Nahbereichs und/oder eine Ausleuchtung des Fernbereichs noch weiter zu verbessern.

Auch kann eine erfindungsgemäße Vorrichtung dahingehend ausgebildet sein, dass die erste Sendeeinheit und/oder die zumindest eine zweite Sendeeinheit zum Abrastern und/oder zum blitzartigen Beleuchten des jeweiligen Beleuchtungsabschnitts ausgebildet sind. Bei einem Abrastern, auch mit Scannen bezeichnet, wird der jeweilige Beleuchtungsabschnitt beispielsweise zeilenweise durch einen eng fokussierten Lichtstrahl der Sendeeinheit abgefahren. Ein blitzartiges Beleuchten hingegen leuchtet den gesamten Beleuchtungsabschnitt bevorzugt vollständig aus. Durch ein Abrastern kann beispielsweise eine räumliche und/oder örtliche Auflösung beim Erkennen von Objekten erhöht werden. Ein blitzartiges Beleuchten hingegen kann ein besonders schnelles Erkennen von Objekten in der Überwachungsumgebung bereitstellen.

Eine Ausgestaltungsform einer erfindungsgemäßen Vorrichtung kann ferner umfassen, dass die Empfangseinheit eine Vielzahl von Lichtsensoren aufweist, wobei insbesondere die Lichtsensoren in einer Sensormatrix angeordnet sind, bevorzugt als Pixel der Sensormatrix, wobei die Sensormatrix besonders bevorzugt 600 × 200 Lichtsensoren als Pixel aufweist. Durch das Vorsehen einer Vielzahl von Lichtsensoren kann insbesondere beispielsweise eine Empfindlichkeit der Empfangseinheit des Empfangsabschnitts erhöht werden. Insbesondere ein Erkennen von Objekten, an denen das durch die Sendeeinheiten ausgesandte Licht nur wenig reflektiert wird, kann dadurch verbessert werden. Auch kann eine Ausfallsicherheit der Empfangseinheit durch den Einsatz einer Vielzahl von Lichtsensoren gesteigert werden, da bei einem Ausfall von einzelnen Lichtsensoren nicht die gesamte erfindungsgemäße Vorrichtung unbrauchbar wird. Ein Anordnen der Lichtsensoren in einer Sensormatrix, wobei bevorzugt die Lichtsensoren Pixel der Sensormatrix bilden, stellt eine besonders bevorzugte und insbesondere platzsparende Anordnung derartiger Lichtsensoren dar. Eine Sensormatrix mit 600 × 200 Lichtsensoren als Pixel hat sich als besonders geeignet erwiesen, um eine möglichst gute Abstimmung zu erreichen zwischen einer Empfindlichkeit der Empfangseinheit und dem nötigen Bauraum, die die Empfangseinheit einnimmt.

Eine erfindungsgemäße Vorrichtung kann ferner derart weiterentwickelt sein, dass die Vielzahl von Lichtsensoren eine erste Sensorgruppe und zumindest eine dazu wenigstens teilweise verschiedene zweite Sensorgruppe umfasst, und wobei Lichtsensoren der ersten Sensorgruppe zum Empfangen von reflektiertem Licht mit der ersten Lichteigenschaft ausgebildet sind und Lichtsensoren der zumindest einen zweiten Sensorgruppe zum Empfangen von reflektiertem Licht mit der zweiten Lichteigenschaft ausgebildet sind. Mit anderen Worten sind in der Empfangseinheit bevorzugt für jede der zu erwartenden Lichteigenschaften spezielle Sensoren vorhanden. Ein Erkennen und/oder Unterscheiden von Licht mit der ersten Lichteigenschaft und der zumindest einen zweiten Lichteigenschaft kann auf diese Weise besonders einfach sichergestellt werden. Insbesondere kann dabei genutzt werden, dass dedizierte Lichtsensoren zum Empfangen von speziellen Lichteigenschaften zumeist kleiner, einfacher und günstiger bereitgestellt werden können, als Lichtsensoren, die zum Empfangen von Licht mit vielen verschiedenen Lichteigenschaften ausgebildet sind. Eine erfindungsgemäße Vorrichtung kann somit insgesamt einfacher und kostengünstiger bereitgestellt werden.

In einer bevorzugten Weiterentwicklung einer erfindungsgemäßen Vorrichtung kann ferner vorgesehen sein, dass in der Sensormatrix die Lichtsensoren der ersten Sensorgruppe und die Lichtsensoren der zumindest einen zweiten Sensorgruppe abwechselnd angeordnet sind. Mit anderen Worten kann auf diese Weise sichergestellt werden, dass die Fähigkeit, Licht mit den einzelnen verschiedenen Lichteigenschaften zu empfangen, gleichmäßig oder zumindest im Wesentlichen gleichmäßig über die gesamte aktive Fläche der Sensormatrix und damit der Empfangseinheit verteilt ist. Ein Empfangen von Licht mit allen Lichteigenschaften kann somit über die gesamte Fläche der Empfangseinheit, bereitgestellt als Sensormatrix, bereitgestellt werden.

Darüber hinaus kann eine erfindungsgemäße Vorrichtung dahingehend ausgebildet sein, dass der Empfangsabschnitt eine erste Abbildungseinheit, bevorzugt umfassend zumindest eine Linse, zum optischen Abbilden und/oder Fokussieren des vom ersten Beleuchtungsabschnitt der Überwachungsumgebung und vom zumindest einen zweiten Beleuchtungsabschnitt der Überwachungsumgebung reflektierten Lichts auf die Empfangseinheit aufweist. Durch eine derartige erste Abbildungseinheit kann sichergestellt werden, dass das von Objekten in der Überwachungsumgebung reflektierte Licht auch sicher auf der Empfangseinheit des Empfangsabschnitts ankommt. Auch kann beispielsweise durch eine derartige erste Abbildungseinheit sichergestellt werden, dass das eingehende reflektierte Licht gleichmäßig auf eine Sensormatrix der Empfangseinheit verteilt wird. Eine besonders gute Ausleuchtung der gesamten Empfangseinheit kann somit sichergestellt werden.

Alternativ oder zusätzlich kann vorgesehen sein, dass die erste Sendeeinheit und/oder die zweite Sendeeinheit eine zweite Abbildungseinheit, bevorzugt umfassend zumindest eine Linse, zum optischen Abbilden und/oder Fokussieren des von der entsprechenden Sendeeinheit in die Überwachungsumgebung ausgesandten Lichts auf den entsprechenden ersten Beleuchtungsabschnitt und/oder zumindest einen zweiten Beleuchtungsabschnitt aufweist. Analog zur oben beschriebenen ersten Abbildungseinheit kann durch eine derartige zweite Abbildungseinheit sichergestellt werden, dass in die Überwachungsumgebung ausgesandtes Licht fokussiert am entsprechenden Beleuchtungsabschnitt ankommt und diesen bevorzugt vollständig ausleuchtet. Auch kann auch hier beispielsweise durch eine derartige zweite Abbildungseinheit sichergestellt werden, dass das durch die erste und/oder zweite Sendeeinheit ausgesendete Licht gleichmäßig auf den jeweiligen Beleuchtungsabschnitt verteilt wird. Eine besonders gute Ausleuchtung der gesamten Überwachungsumgebung kann somit sichergestellt werden. Ferner können diese zweiten Abbildungseinheiten auch zum Einstellen und/oder Verändern der jeweiligen Lichteigenschaft eingesetzt werden, beispielsweise durch einen Polarisationsfilter und/oder einen Farbfilter.

Ferner kann bei einer erfindungsgemäßen Vorrichtung vorgesehen sein, dass die erste Sendeeinheit und/oder die zweite Sendeeinheit eine Vielzahl von Lichtsendern aufweist, wobei die Lichtsender in einer Sendermatrix angeordnet sind, insbesondere als Pixel der Sendermatrix, wobei die Sendermatrix bevorzugt 2 × 4 Lichtsender als Pixel aufweist. Durch eine Vielzahl von Lichtsendern als Teil der Sendeeinheiten kann die insgesamt nötige Lichtleistung auf viele einzelne Lichtsender verteilt werden. Die einzelnen Lichtsender können somit wiederum kleiner, verbrauchsärmer und insgesamt kostengünstiger bereitgestellt werden. Auch kann eine Ausfallsicherheit der jeweiligen Sendeeinheit durch den Einsatz einer Vielzahl von Lichtsendern gesteigert werden, da bei einem Ausfall von einzelnen Lichtsendern nicht die gesamte erfindungsgemäße Vorrichtung unbrauchbar wird. Eine Sendermatrix, die die einzelnen Lichtsender als Pixel aufweisen, besonders bevorzugt eine 2 × 4 Sendermatrix, hat sich als besonders effektiv erwiesen, um bei gleichzeitiger Verkleinerung der einzelnen Lichtsender dennoch die für die einzelnen Sendeeinheiten nötige Lichtleistung bereitstellen zu können. Bei einer Ausführungsform, in der die zumindest zwei Sendeinheiten in einer gemeinsamen Baugruppe ausgeführt sind, kann auch vorgesehen sein, dass die Lichtsender beider Sendeeinheiten zusammen die Sendermatrix bilden, wobei dann die jeweiligen Sendeeinheiten alternierend in der Sendermatrix angeordnet sein können.

Bevorzugt kann eine erfindungsgemäße Vorrichtung dahingehend ausgebildet sein, dass die Empfangseinheit zwischen der ersten Sendeeinheit und der zumindest einen zweiten Sendeeinheit angeordnet ist. Mit anderen Worten wird die Empfangseinheit durch die Sendeeinheiten eingerahmt. Eine besonders platzsparende und kompakte Anordnung der Sendeeinheiten in Bezug auf die Empfangseinheit und dadurch der gesamten erfindungsgemäßen Vorrichtung kann auf diese Weise bereitgestellt werden.

Gemäß einem zweiten Aspekt der Erfindung wird die Aufgabe gelöst durch ein Fahrzeug mit einer Vorrichtung zum Erkennen von Objekten in einer Überwachungsumgebung. Ein erfindungsgemäßes Fahrzeug ist dadurch gekennzeichnet, dass die Vorrichtung gemäß dem ersten Aspekt der Erfindung ausgebildet ist. Sämtliche Vorteile, die bereits in Bezug auf eine Vorrichtung zum Erkennen von Objekten in einer Überwachungsumgebung gemäß dem ersten Aspekt der Erfindung ausführlich beschrieben worden sind, können somit auch durch ein erfindungsgemäßes Fahrzeug gemäß dem zweiten Aspekt der Erfindung bereitgestellt werden, das eine derartige Vorrichtung gemäß dem ersten Aspekt der Erfindung aufweist.

Weitere Merkmale und Vorteile der Erfindung werden nachfolgend in Bezug auf Zeichnungen beschrieben. Elemente mit gleicher Funktion und Wirkungsweise sind in den einzelnen Figuren jeweils mit denselben Bezugszeichen versehen.

Es zeigen schematisch:
- Fig. 1: ein erfindungsgemäßes Fahrzeug,
- Fig.2: eine erste Ausgestaltungsform einer erfindungsgemäßen Vorrichtung,
- Fig. 3: eine zweite Ausgestaltungsform einer erfindungsgemäßen Vorrichtung,
- Fig. 4: eine dritte Ausgestaltungsform einer erfindungsgemäßen Vorrichtung,
- Fig. 5: ein mögliches Sichtfeld einer erfindungsgemäßen Vorrichtung, und
- Fig. 6: eine Sendeeinheit sowie eine Empfangseinheit.

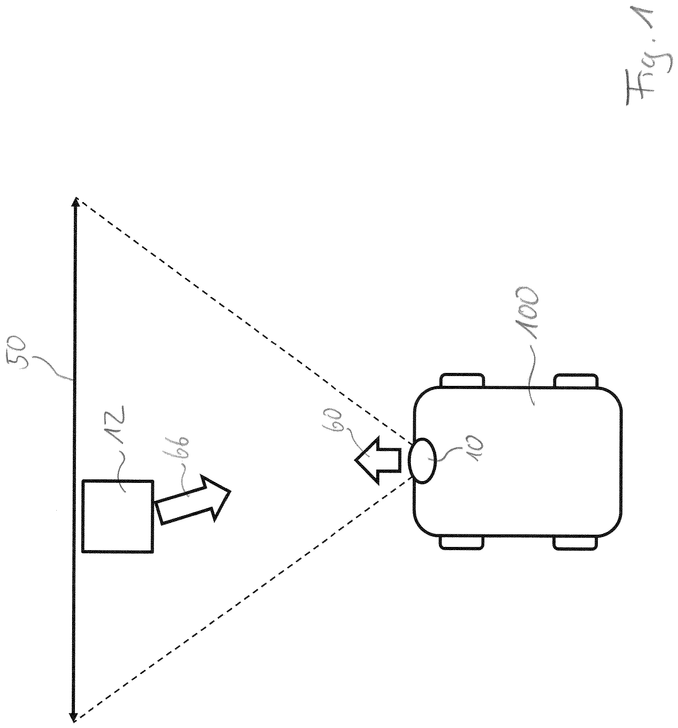

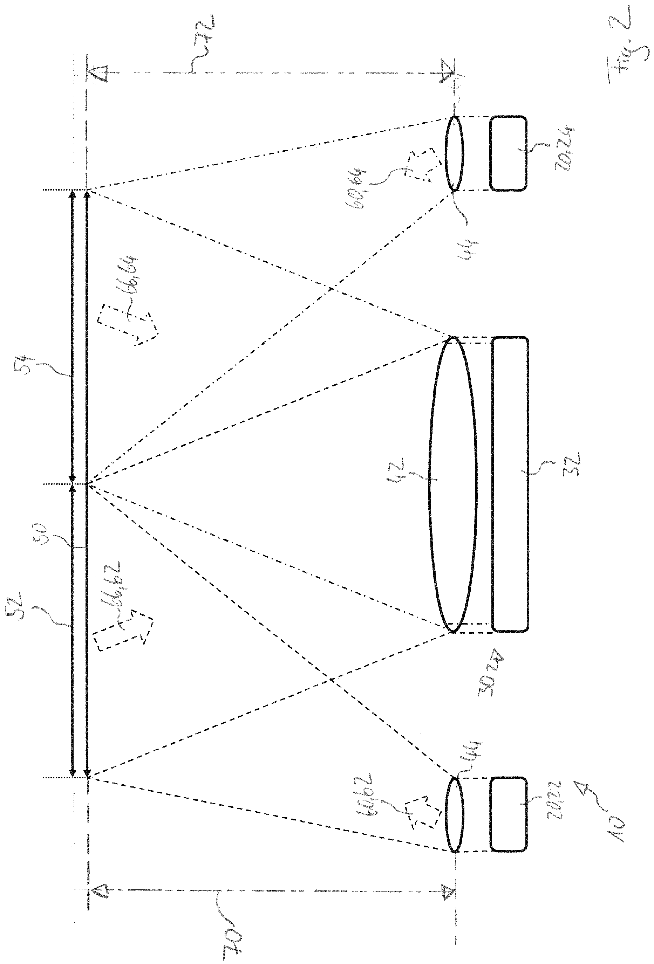

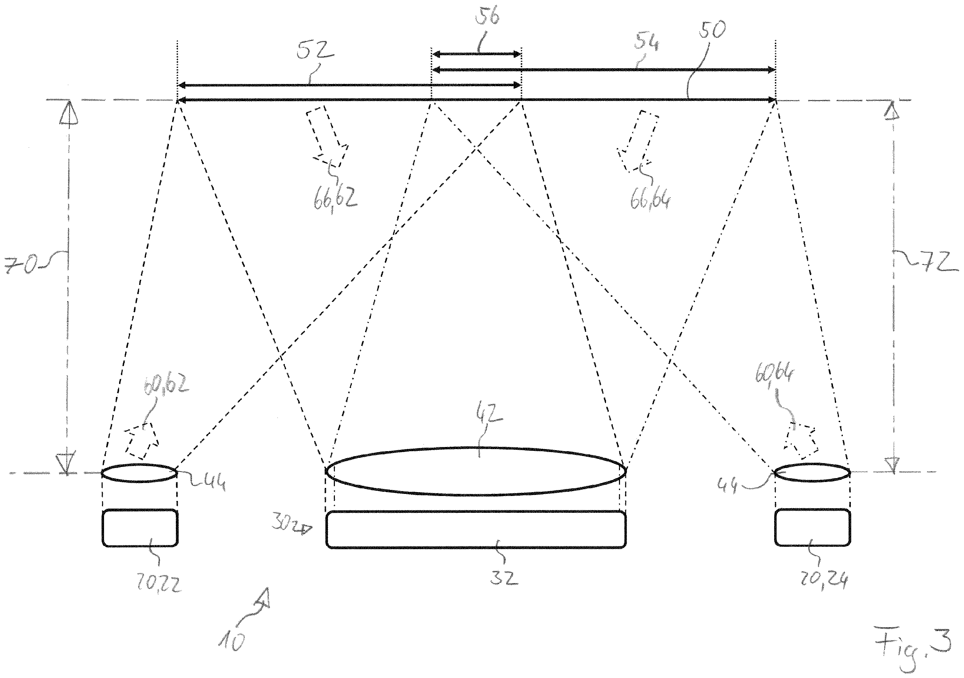

Fig. 1 zeigt ein Fahrzeug 100, das mit einer erfindungsgemäßen Vorrichtung 10 ausgestattet ist. Durch die Vorrichtung 10, wie sie beispielsweise in den weiteren Fig. 2 und 3 gezeigt ist, wird Licht 60 in eine Überwachungsumgebung 50 ausgesandt. Ein Objekt 12, das sich in dieser Überwachungsumgebung 50 befindet, reflektiert zumindest teilweise das ausgesandte Licht 60 als reflektiertes Licht 66, das zur Vorrichtung 10 zurückgeworfen wird. Durch die Vorrichtung 10 wird dieses reflektierte Licht 66 empfangen und im Nachgang ausgewertet, um das Objekt 12 in der Überwachungsumgebung 50 zu erkennen. Dadurch können beispielsweise Abstandsmessungen zwischen dem Fahrzeug 100 und dem Objekt 12 bereitgestellt werden, insbesondere um zum Beispiel zu einer Datengrundlage für ein autonomes Führen des Fahrzeugs 100 beizutragen.

Fig. 2 zeigt die wesentlichen Elemente einer ersten Ausgestaltungsform einer erfindungsgemäßen Vorrichtung 10. Kernstück der erfindungsgemäßen Vorrichtung 10 sind ein Sendeabschnitt 20 sowie ein Empfangsabschnitt 30. Der Sendeabschnitt 20 weist, wie dargestellt, eine erste Sendeeinheit 22 und zumindest eine zweite Sendeeinheit 24 auf, die zum jeweiligen Aussenden von Licht 60 ausgebildet sind. Dabei ist vorgesehen, dass die erste Sendeeinheit 22 zum Aussenden von Licht 60 mit einer ersten Lichteigenschaft 62 und die zweite Sendeeinheit 24 zum Aussenden von Licht 60 mit einer zweiten Lichteigenschaft 64 ausgebildet sind. Lichteigenschaften 62, 64 können in nicht zur Erfindung gehörenden Beispielen eine Wellenlänge, Polarisierung, Phase sein und sind in einer erfindungsgemäßen Ausführung eine Farbmischung des entsprechend ausgesandten Lichts 60. Zum Beispiel können als erste Lichteigenschaft 62 eine Farbmischung aus 40 % Blau und 20 % Rot, die zweite Lichteigenschaft 64 des von der zweiten Sendeeinheit 24 ausgesandten Lichts 60 eine Farbmischung von 10 % Rot und 30 % Grün sein. Beide Sendeeinheiten 22, 24 weisen in der dargestellten Ausführungsform jeweils eine zweite Abbildungseinheit 44 auf. Die jeweilige zweite Abbildungseinheit 44, die zum Beispiel eine Linse umfassen kann, ist zum optischen Abbilden des ausgesendeten Lichts 60 in beziehungsweise auf den entsprechenden Abbildungsabschnitt 52, 54 ausgebildet und vorgesehen. Auch eine Veränderung der jeweiligen Lichteigenschaft 62, 64 des ausgesandten Lichts 60 kann durch eine derartige zweite Abbildungseinheit 44 bereitgestellt werden.

Die beiden Sendeeinheiten 22, 24 senden ihr jeweiliges Licht 60 in Beleuchtungsabschnitte 52, 54 aus, die in dieser Ausgestaltungsform die Überwachungsumgebung 50 vollständig überdecken, wobei der erste Beleuchtungsabschnitt 52 und der zweite Beleuchtungsabschnitt 54 nicht überlappen und unmittelbar aneinander angrenzen. Eine besonders gute und energiesparende vollständige Ausleuchtung der gesamten Überwachungsumgebung 50 kann auf diese Weise bereitgestellt werden. So kann beispielsweise die Überwachungsumgebung 50 einen Bereich von 120° × 40° vor der erfindungsgemäßen Vorrichtung 10 überdecken, wobei die beiden Beleuchtungsabschnitte 52, 54 diese Überwachungsumgebung 50 zu gleichen Teilen überdecken und somit bevorzugt beispielsweise jeweils 60° × 40° abdecken.

Das Aussenden des jeweiligen Lichts 60 durch die Sendeeinheiten 22, 24 kann beispielsweise in Form eines Abrasterns und/oder eines blitzartigen Beleuchtens des jeweiligen Beleuchtungsabschnitts 52, 54 durchgeführt werden.

In der Überwachungsumgebung 50 können sich Objekte 12 (nicht abgebildet) befinden, an denen das ausgesandte Licht 60 reflektiert wird. Dieses reflektierte Licht 66, jeweils mit der entsprechenden Lichteigenschaft 62, 64, wird zur erfindungsgemäßen Vorrichtung 10 zurück reflektiert. Zum Empfangen des reflektierten Lichts 66 weist eine erfindungsgemäße Vorrichtung 10 einen Empfangsabschnitt 30 auf, der wie abgebildet bevorzugt zwischen den beiden Sendeeinheiten 22, 24 des Sendeabschnitts 20 angeordnet sein kann. Das reflektierte Licht 66 trifft zuerst auf eine erste Abbildungseinheit 42 des Empfangsabschnitts 30, die das reflektierte Licht 66 unabhängig von der jeweiligen Lichteigenschaft 62, 64 auf eine Empfangseinheit 32 des Empfangsabschnitts 30 abbildet bzw. fokussiert. In der Empfangseinheit 32 wird das reflektierte Licht 66 mit beiden Lichteigenschaften 62, 64 registriert. In einer durch die erfindungsgemäße Vorrichtung 10 durchgeführte oder dieser nachgeschalteten Auswertung und Analyse kann aus diesen Messdaten dann auf die erkannten Objekte 12 in der Überwachungsumgebung 50 rückgeschlossen werden.

Fig. 3 zeigt eine alternative Ausgestaltungsform einer erfindungsgemäßen Vorrichtung 10, die sich im Wesentlichen nur durch die Aufteilung der Überwachungsumgebung 50 in die beiden Beleuchtungsabschnitte 52, 54 von der in Fig. 2 gezeigten Ausgestaltungsform unterscheidet. Bezüglich der Ausführungsformen des Sendeabschnitts 20 und des Empfangsabschnitts 30 der jeweiligen erfindungsgemäßen Vorrichtung 10 wird daher auf die obige Beschreibung der Fig. 2 verwiesen.

In dieser Ausgestaltungsform einer erfindungsgemäßen Vorrichtung 10 ist vorgesehen, dass sich der erste Beleuchtungsabschnitt 52 der ersten Sendeeinheit 22 und der zweite Beleuchtungsabschnitt 54 der zweiten Sendeeinheit 24 überlappen. Mit anderen Worten bildet sich im Bereich des Überlapps der beiden Beleuchtungsabschnitte 52, 54 ein Redundanzbereich 56 aus, der durch Licht 60 sowohl mit der ersten Lichteigenschaft 62 als auch mit der zweiten Lichteigenschaft 64 ausgeleuchtet wird. Eine besonders hohe Auflösung für diesen Redundanzbereich 56 kann auf diese Weise bereitgestellt werden.

Ferner können die beiden in Fig. 2 und Fig. 3 gezeigten Ausgestaltungsformen einer erfindungsgemäßen Vorrichtung 10 auch gleichzeitig realisiert sein, wenn zwei Überwachungsumgebungen 50 in verschiedenen Abständen 70, 72 von der erfindungsgemäßen Vorrichtung 10 betrachtet werden. Insbesondere können beispielsweise auch erst in einer durch die erfindungsgemäße Vorrichtung 10 vorgenommene oder nachgeschaltete Auswertung eine oder mehrere Überwachungsumgebungen 50 in verschiedenen Abständen 70, 72 zum Empfangsabschnitt 30 festgelegt und/oder ausgewertet werden

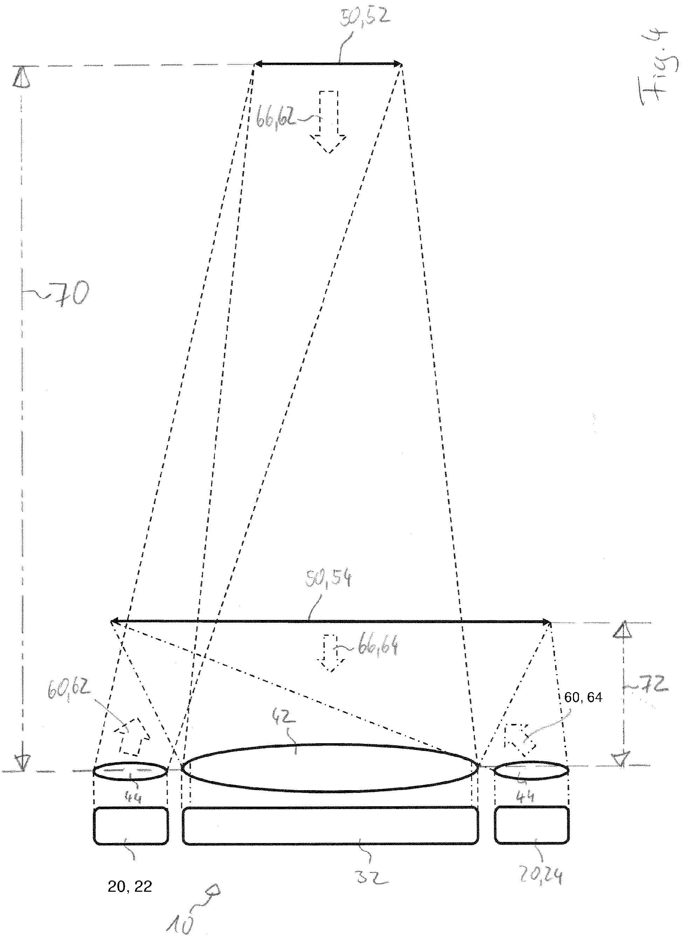

Dies kann insbesondere und wie in Fig. 4 dargestellt auch derart bereitgestellt werden, dass bereits die ursprünglich vorgesehenen Beleuchtungsabschnitte 52, 54 in unterschiedlichen Abständen 70, 72 vom Empfangsabschnitt 30 eingestellt beziehungsweise vorgesehen sind. Eine Überwachung eines Fernbereichs, abgedeckt durch den ersten Beleuchtungsabschnitt 52 im ersten Abstand 70, und eines Nahbereichs, abgedeckt durch den zweiten Beleuchtungsabschnitt 54 im zweiten Abstand 72, kann auf diese Weise gleichzeitig bereitgestellt werden. Die gesamte Überwachungsumgebung 50 ergibt sich erneut aus den jetzt räumlich getrennten einzelnen Beleuchtungsabschnitten 52, 54 und kann somit auf einfache Art und Weise erweitert werden. Wie dargestellt kann hierbei bevorzugt ein durch den ersten Beleuchtungsabschnitt 52 abgedeckter Winkelbereich kleiner sein als ein durch den zumindest einen zweiten Beleuchtungsabschnitt 54 abgedeckter Winkelbereich. Auf diese Weise kann der bei einer Ausleuchtung des Fernbereichs deutlich größere Energieverbrauch zumindest teilweise kompensiert werden.

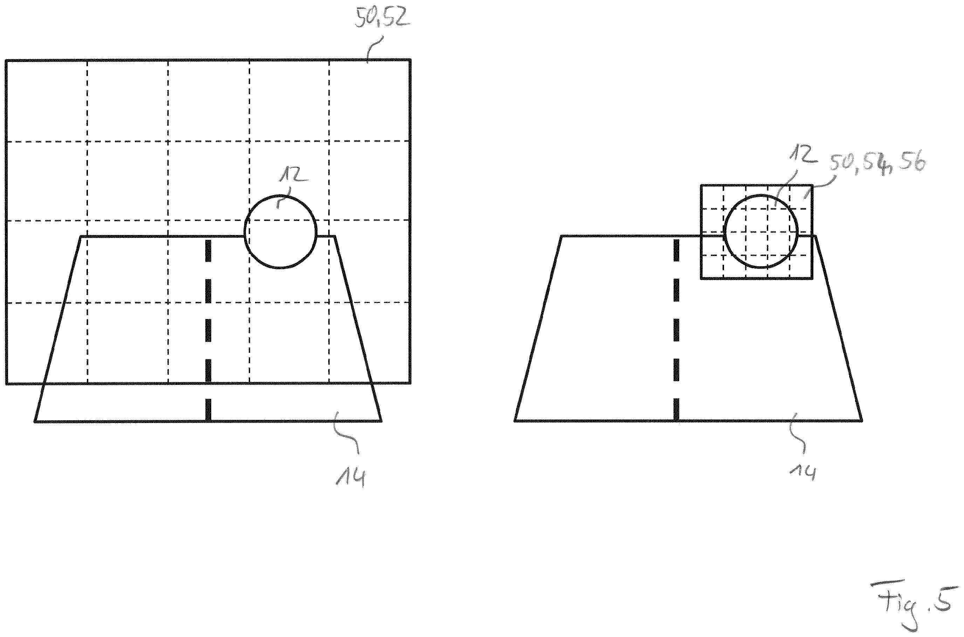

In Fig. 5 ist ein mögliches Sichtfeld einer erfindungsgemäßen Vorrichtung 10 auf eine Straße 14 mit einem Ball als Objekt 12 gezeigt. Insbesondere ist in dieser Ausführungsform der zumindest eine zweite Beleuchtungsabschnitt 54 vollständig durch den ersten Beleuchtungsabschnitt 52 überlappt. Mit anderen Worten wird der Redundanzbereich 56 durch den zweiten Beleuchtungsabschnitt 54 gebildet. Ein sich in diesem Redundanzbereich 56 befindendes Objekt 12 kann auf diese Weise mit höherer Auflösung und dadurch detaillierter erkannt werden. Die Beleuchtungsabschnitte 52, 54 wiederum erzeugen zusammen die Überwachungsumgebung 50. Es kann auch vorgesehen sein, dass die Beleuchtungsabschnitte 52, 54 in unterschiedlichen Abständen 70, 72 (siehe Fig. 4) vorgesehen sind und somit der erste Beleuchtungsabschnitt 52 einen Fernbereich und der zumindest eine zweite Beleuchtungsabschnitt 54 einen Nahbereich ausleuchtet.

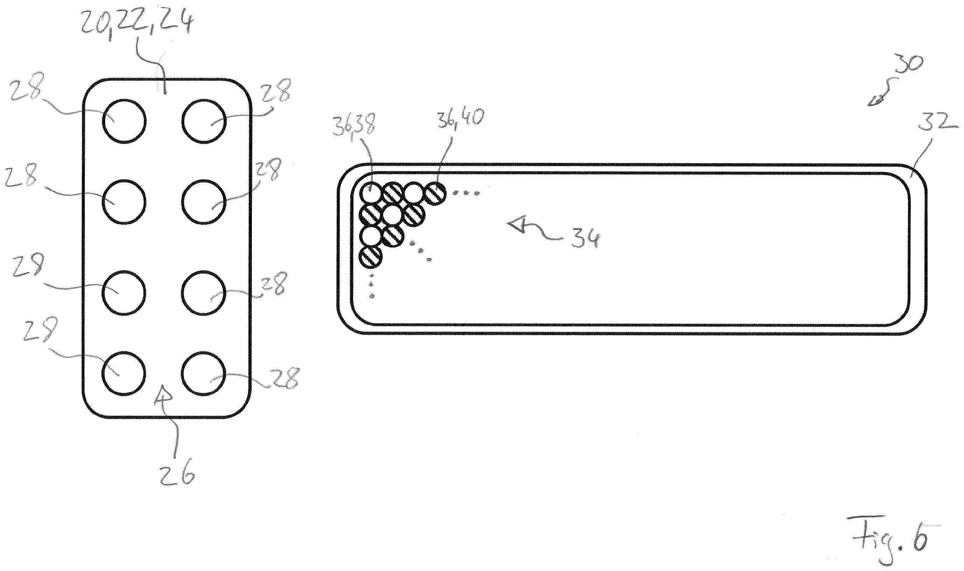

Fig. 6 zeigt mögliche Ausgestaltungsformen von einer Sendeeinheit 22, 24 eines Sendeabschnitts 20 sowie einer Empfangseinheit 32 eines Empfangsabschnitts 30. So können beispielsweise die Sendeeinheiten 22, 24 Lichtsender 28 aufweisen, die in einer Sendermatrix 26 angeordnet sind. Wie dargestellt, können beispielsweise acht Lichtsender 28 eine 2 × 4 Sendermatrix 26 bilden. Nicht dargestellt ist eine alternative Ausführungsform, in der die zumindest zwei Sendeinheiten 22, 24 in einer gemeinsamen Baugruppe ausgeführt sind. Hierbei kann beispielsweise vorgesehen sein, dass Lichtsender 28 beider Sendeeinheiten 22, 24 zusammen die Sendermatrix 26 bilden, wobei dann die jeweiligen Sendeeinheiten 22,24 oder deren Lichtsender 28 alternierend in der Sendermatrix 26 angeordnet sein können.

Ähnliches kann auch bei der Empfangseinheit 32 des Empfangsabschnitts 30 vorgesehen sein. So können auch hier eine Vielzahl von Lichtsensoren 36 vorgesehen sein, die ebenfalls in Form einer Sensormatrix 34, hier schematisch für einige Lichtsensoren 36 dargestellt, angeordnet sein. Die Lichtsensoren 36 können dabei bevorzugt eine erste Sensorgruppe 38 sowie eine zweite Sensorgruppe 40 zusammengefasst werden, wobei die einzelnen Sensorgruppen 38, 40 jeweils zum Erkennen einer der beiden Lichteigenschaften 62, 64 (jeweils nicht abgebildet) ausgebildet sind. Als bevorzugt hat sich insbesondere eine abwechselnde Anordnung von Lichtsensoren 36 der beiden Sensorgruppen 38, 40 in der Sensormatrix 34 herausgestellt. Die Sensormatrix 34 kann beispielsweise bevorzugt 600 × 200 Lichtsensoren 36 als Pixel aufweisen.

### Bezugszeichen

- 10: Vorrichtung
- 12: Objekt
- 14: Straße

- 20: Sendeabschnitt
- 22: erste Sendeeinheit
- 24: zweite Sendeeinheit
- 26: Sendermatrix
- 28: Lichtsender

- 30: Empfangsabschnitt
- 32: Empfangseinheit
- 34: Sensormatrix
- 36: Lichtsensor
- 38: erste Sensorgruppe
- 40: zweite Sensorgruppe
- 42: erste Abbildungseinheit
- 44: zweite Abbildungseinheit

- 50: Überwachungsumgebung
- 52: erster Beleuchtungsabschnitt
- 54: zweiter Beleuchtungsabschnitt
- 56: Redundanzbereich

- 60: Licht
- 62: erste Lichteigenschaft
- 64: zweite Lichteigenschaft
- 66: reflektiertes Licht
- 70: erster Abstand
- 72: zweiter Abstand

- 100: Fahrzeug

## Patentansprüche

1. Vorrichtung (10) zum Erkennen von Objekten (12) in einer Überwachungsumgebung (50), aufweisend einen Sendeabschnitt (20) zum Aussenden von Licht (60), insbesondere von Laserlicht, in die Überwachungsumgebung (50) und einen Empfangsabschnitt (30) zum Empfangen von an Objekten (12) in der Überwachungsumgebung (50) reflektiertem Licht (66), wobei der Sendeabschnitt (20) eine erste Sendeeinheit (22) zum Aussenden von Licht (60) mit einer ersten Lichteigenschaft (62) in einen ersten Beleuchtungsabschnitt (52) der Überwachungsumgebung (50) und zumindest eine zweite Sendeeinheit (24) zum gleichzeitigen Aussenden von Licht (60) mit einer zweiten Lichteigenschaft (64) in einen zweiten Beleuchtungsabschnitt (54) der Überwachungsumgebung (50) aufweist, wobei der Empfangsabschnitt (30) eine Empfangseinheit (32) zum gleichzeitigen Empfangen von reflektiertem Licht (66) mit der ersten Lichteigenschaft (62) und von reflektiertem Licht (66) mit der zumindest einen zweiten Lichteigenschaft (64) aufweist, und die erste Lichteigenschaft (62) des durch die erste Sendeeinheit (22) ausgesandten Lichts (60) und die zumindest eine zweite Lichteigenschaft (64) des durch die zumindest eine zweite Sendeeinheit (24) ausgesandten Lichts (60) als eine Farbmischung ausgebildet sind, **dadurch gekennzeichnet, dass**
die erste Lichteigenschaft (62) und die zumindest eine zweite Lichteigenschaft (64) unterschiedlich ausgebildet sind,
wobei eine erste Lichtfarbe nur als Teil der ersten Lichteigenschaft (62), eine zweite Lichtfarbe nur als Teil der zweiten Lichteigenschaft (64) und zumindest eine dritte Lichtfarbe als Teil beider Lichteigenschaften (62, 64) eingesetzt ist

2. Vorrichtung (10) nach Anspruch 1,
**dadurch gekennzeichnet, dass**
als erste Lichtfarbe Blau, insbesondere Blau um einen Mittelwert von ca. 470 nm, und/oder als zweite Lichtfarbe Grün, insbesondere Grün um einen Mittelwert von ca. 540 nm, und/oder als zumindest eine dritte Lichtfarbe Rot, insbesondere Rot um einen einem Mittelwert von ca. 700 nm, eingesetzt ist.

3. Vorrichtung (10) nach Anspruch 1 oder 2,
**dadurch gekennzeichnet, dass**
als Lichtfarbe eines Lichts (60) ein Wellenlängenband um einen Mittelwert verwendet ist, insbesondere ein Wellenlängenband von ± 25 nm um den Mittelwert, bevorzugt ein Wellenlängenband von ± 5 nm um den Mittelwert, oder dass das Licht (60) als monochromatisches Laserlicht ausgebildet ist und die Lichtfarbe des Lichts (60) durch das monochromatische Laserlicht festgelegt ist.

4. Vorrichtung (10) nach Anspruch 1 bis 3,
**dadurch gekennzeichnet, dass**
der erste Beleuchtungsabschnitt (52) und der zumindest eine zweite Beleuchtungsabschnitt (54) die Überwachungsumgebung (50) vollständig oder zumindest im Wesentlichen vollständig abdecken.

5. Vorrichtung (10) nach Anspruch 4,
**dadurch gekennzeichnet, dass**
der erste Beleuchtungsabschnitt (52) und der zumindest eine zweite Beleuchtungsabschnitt (54) die Überwachungsumgebung (50) zu gleichen Teilen oder zumindest im Wesentlichen gleichen Teilen abdecken, wobei bevorzugt die Überwachungsumgebung (50) einen Winkelbereich von 120° × 40° abdeckt und davon der erste Beleuchtungsabschnitt (52) und der zweite Beleuchtungsabschnitt (54) jeweils 60° × 40° abdecken.

6. Vorrichtung (10) nach einem der vorstehenden Ansprüche,
**dadurch gekennzeichnet, dass**
sich der erste Beleuchtungsabschnitt (52) und der zumindest eine zweite Beleuchtungsabschnitt (54) nicht überlappen und/oder dass der erste Beleuchtungsabschnitt (52) und der zumindest eine zweite Beleuchtungsabschnitt (54) aneinander angrenzen, bevorzugt zumindest teilweise unmittelbar aneinander angrenzen.

7. Vorrichtung (10) nach einem der vorstehenden Ansprüche 1 bis 5,
**dadurch gekennzeichnet, dass**
sich der erste Beleuchtungsabschnitt (52) und der zumindest eine zweite Beleuchtungsabschnitt (54) in einem Redundanzbereich (56) überlappen, insbesondere dass der zumindest eine zweite Beleuchtungsabschnitt (54) vollständig mit dem ersten Beleuchtungsabschnitt (52) überlappt und so den Redundanzbereich (56) bildet.

8. Vorrichtung (10) nach einem der vorstehenden Ansprüche,
**dadurch gekennzeichnet, dass**
sich der erste Beleuchtungsabschnitt (52) in einem ersten Abstand (70) vom Empfangsabschnitt (30) und der zumindest eine zweite Beleuchtungsabschnitt (54) in einem zweiten Abstand (72) vom Empfangsabschnitt (30) angeordnet sind, wobei der erste Abstand (70) und der zweite Abstand (72) unterschiedlich ausgebildet sind.

9. Vorrichtung (10) nach einem der vorstehenden Ansprüche,
**dadurch gekennzeichnet, dass**
die erste Sendeeinheit (22) und/oder die zumindest eine zweite Sendeeinheit (24) zum Abrastern und/oder zum blitzartigen Beleuchten des jeweiligen Beleuchtungsabschnitts (52, 54) ausgebildet sind.

10. Vorrichtung (10) nach einem der vorstehenden Ansprüche,
**dadurch gekennzeichnet, dass**
die Empfangseinheit (32) eine Vielzahl von Lichtsensoren (36) aufweist, wobei insbesondere die Lichtsensoren (36) in einer Sensormatrix (34) angeordnet sind, bevorzugt als Pixel der Sensormatrix (34), wobei die Sensormatrix (34) besonders bevorzugt 600 × 200 Lichtsensoren (36) als Pixel aufweist.

11. Vorrichtung (10) nach Anspruch 10,
**dadurch gekennzeichnet, dass**
die Vielzahl von Lichtsensoren (36) eine erste Sensorgruppe (38) und zumindest eine dazu wenigstens teilweise verschiedene zweite Sensorgruppe (40) umfasst, und wobei Lichtsensoren (36) der ersten Sensorgruppe (38) zum Empfangen von reflektierten Licht (66) mit der ersten Lichteigenschaft (62) ausgebildet sind und Lichtsensoren (36) der zumindest einen zweiten Sensorgruppe (40) zum Empfangen von reflektierten Licht (66) mit der zweiten Lichteigenschaft (64) ausgebildet sind.

12. Vorrichtung (10) nach Anspruch 11,
**dadurch gekennzeichnet, dass**
in der Sensormatrix (34) die Lichtsensoren (36) der ersten Sensorgruppe (38) und die Lichtsensoren (36) der zumindest einen zweiten Sensorgruppe (40) abwechselnd angeordnet sind.

13. Vorrichtung (10) nach einem der vorstehenden Ansprüche,
**dadurch gekennzeichnet, dass**
der Empfangsabschnitt (30) eine erste Abbildungseinheit (42), bevorzugt umfassend zumindest eine Linse, zum optischen Abbilden und/oder Fokussieren des vom ersten Beleuchtungsabschnitt (52) der Überwachungsumgebung (50) und vom zumindest einen zweiten Beleuchtungsabschnitt (54) der Überwachungsumgebung (50) reflektieren Lichts (66) auf die Empfangseinheit (32) aufweist, und/oder
dass die erste Sendeeinheit (22) und/oder die zweite Sendeeinheit (24) eine zweite Abbildungseinheit (44), bevorzugt umfassend zumindest eine Linse, zum optischen Abbilden und/oder Fokussieren des von der entsprechenden Sendeeinheit (22, 24) in die Überwachungsumgebung (50) ausgesandten Lichts (60) auf den entsprechenden ersten Beleuchtungsabschnitt (52) und/oder zumindest einen zweiten Beleuchtungsabschnitt (54) aufweist.

14. Vorrichtung (10) nach einem der vorstehenden Ansprüche,
**dadurch gekennzeichnet, dass**
die erste Sendeeinheit (22) und/oder die zweite Sendeeinheit (24) eine Vielzahl von Lichtsendern (28) aufweist, wobei die Lichtsender (28) in einer Sendermatrix (26) angeordnet sind, insbesondere als Pixel der Sendermatrix (26), wobei die Sendermatrix (26) bevorzugt 2 × 4 Lichtsender (28) als Pixel aufweist;
und/oder die Empfangseinheit (32) zwischen der ersten Sendeeinheit (22) und der zumindest einen zweiten Sendeeinheit (24) angeordnet ist.

15. Fahrzeug (100) mit einer Vorrichtung (10) zum Erkennen von Objekten (12) in einer Überwachungsumgebung (50),
**dadurch gekennzeichnet, dass**
die Vorrichtung (10) nach einem der vorstehenden Ansprüche ausgebildet ist.

## Claims

1. An apparatus (10) for recognizing objects (12) in a monitoring environment (50), said apparatus (10) having a transmission section (20) for transmitting light (60), in particular laser light, into the monitoring environment (50) and a receiving section (30) for receiving light (66) reflected at objects (12) in the monitoring environment (50),
wherein the transmission section (20) has a first transmission unit (22) for transmitting light (60) having a first light property (62) into a first illumination section (52) of the monitoring environment (50) and at least a second transmission unit (24) for simultaneously transmitting light (60) having a second light property (64) into a second illumination section (54) of the monitoring environment (50), wherein the receiving section (30) has a receiving unit (32) for simultaneously receiving reflected light (66) having the first light property (62) and reflected light (66) having the at least a second light property (64), and wherein the first light property (62) of the light (60) transmitted by the first transmission unit (22) and the at least a second light property (64) of the light (60) transmitted by the at least a second transmission unit (24) are formed as a color mixture,
**characterized in that**
the first light property (62) and the at least a second light property (64) are formed differently,
with a first light color (80) being used only as a portion of the first light property (62), a second light color (82) being used only as a portion of the second light property (64) and at least a third light color (84) being used as a portion of both light properties (62, 64).

2. An apparatus (10) in accordance with claim 1,
**characterized in that**
blue, in particular blue around a mean value of approximately 470 nm, is used as the first light color, and/or green, in particular green around a mean value of approximately 540 nm, is used as the second light color, and/or red, in particular red around a mean value of approximately 700 nm, is used as at least a third light color.

3. An apparatus (10) in accordance with claim 1 or claim 2,
**characterized in that**
a wavelength band around a mean value is used as a light color of a light (60), in particular a wavelength band of ± 25 nm around the mean value, preferably a wavelength band of ± 5 nm around the mean value, or **in that** the light (60) is formed as monochromatic laser light and the light color of the light (60) is determined by the monochromatic laser light.

4. An apparatus (10) in accordance with claims 1 to 3,
**characterized in that**
the first illumination section (52) and the at least a second illumination section (54) completely or at least substantially completely cover the monitoring environment (50).

5. An apparatus (10) in accordance with claim 4,
**characterized in that**
the first illumination section (52) and the at least a second illumination section (54) cover the monitoring environment (50) in equal parts or at least substantially equal parts, with preferably the monitoring environment (50) covering an angular range of 120° × 40° and the first illumination section (52) and the second illumination section (54) each covering 60° × 40° of said angular range.

6. An apparatus (10) in accordance with any one of the preceding claims,
**characterized in that**
the first illumination section (52) and the at least a second illumination section (54) do not overlap; and/or **in that** the first illumination section (52) and the at least a second illumination section (54) adjoin one another, preferably at least partly directly adjoin one another.

7. An apparatus (10) in accordance with any one of the claims 1 to 5,
**characterized in that**
the first illumination section (52) and the at least a second illumination section (54) overlap in a redundancy region (56), in particular **in that** the at least a second illumination section (54) completely overlaps with the first illumination section (52) and thus forms the redundancy region (56).

8. An apparatus (10) in accordance with any one of the preceding claims,
**characterized in that**
the first illumination section (52) is arranged at a first spacing (70) from the receiving section (30) and the at least a second illumination section (54) is arranged at a second spacing (72) from the receiving section (30), with the first spacing (70) and the second spacing (72) being formed differently.

9. An apparatus (10) in accordance with any one of the preceding claims,
**characterized in that**
the first transmission unit (22) and the at least a second transmission unit (24) are configured for a scanning and/or for a flash-like illumination of the respective illumination section (52, 54).

10. An apparatus (10) in accordance with any one of the preceding claims,
**characterized in that**
the receiving unit (32) has a plurality of light sensors (36), with in particular the light sensors (36) being arranged in a sensor matrix (34), preferably as pixels of the sensor matrix (34), with the sensor matrix (34) particularly preferably having 600 × 200 light sensors (36) as pixels.

11. An apparatus (10) in accordance with claim 10,
**characterized in that**
the plurality of light sensors (36) comprises a first sensor group (38) and at least a second sensor group (40) which is at least partly different therefrom, and with light sensors (36) of the first sensor group (38) being configured to receive reflected light (66) having the first light property (62) and light sensors (36) of the at least a second sensor group (40) being configured to receive reflected light (66) having the second light property (64).

12. An apparatus (10) in accordance with claim 11,
**characterized in that**
the light sensors (36) of the first sensor group (38) and the light sensors (36) of the at least a second sensor group (40) are alternately arranged in the sensor matrix (34).

13. An apparatus (10) in accordance with any one of the preceding claims,
**characterized in that**
the receiving section (30) has a first imaging unit (42), preferably comprising at least one lens, for optically imaging and/or focusing the light (66) reflected from the first illumination section (52) of the monitoring environment (50) and from the at least a second illumination section (54) of the monitoring environment (50) onto the receiving unit (32); and/or
**in that** the first transmission unit (22) and/or the second transmission unit (24) has/have a second imaging unit (44), preferably comprising at least one lens, for optically imaging and/or focusing the light (60) transmitted by the corresponding transmission unit (22, 24) into the monitoring environment (50) onto the corresponding first illumination section (52) and/or at least a second illumination section (54).

14. An apparatus (10) in accordance with any one of the preceding claims,
**characterized in that**
the first transmission unit (22) and/or the second transmission unit (24) has/have a plurality of light transmitters (28), with the light transmitters (28) being arranged in a transmitter matrix (26), in particular as pixels of the transmitter matrix (26), with the transmitter matrix (26) preferably having 2 × 4 light transmitters (28) as pixels;
and/or the receiving unit (32) is arranged between the first transmission unit (22) and the at least a second transmission unit (24).

15. A vehicle (100) comprising an apparatus (10) for recognizing objects (12) in a monitoring environment (50),
**characterized in that**
the apparatus (10) is configured in accordance with any one of the preceding claims.

## Revendications

1. Dispositif (10) pour détecter des objets (12) situés dans un environnement à surveiller (50), comprenant une section d'émission (20) pour émettre de la lumière (60), en particulier de la lumière laser, vers l'environnement à surveiller (50), et une section de réception (30) pour recevoir de la lumière (66) réfléchie au niveau des objets (12) situés dans l'environnement à surveiller (50),
dans lequel
la section d'émission (20) comprend une première unité d'émission (22) pour émettre de la lumière (60) ayant une première caractéristique de lumière (62) vers une première section d'éclairage (52) de l'environnement à surveiller (50) et au moins une deuxième unité d'émission (24) pour émettre simultanément de la lumière (60) ayant une deuxième caractéristique de lumière (64) vers une deuxième section d'éclairage (54) de l'environnement à surveiller (50),
la section de réception (30) comprend une unité de réception (32) pour recevoir simultanément de la lumière réfléchie (66) ayant la première caractéristique de lumière (62) et de la lumière réfléchie (66) ayant ladite au moins une deuxième caractéristique de lumière (64), et
la première caractéristique de lumière (62) de la lumière (60) émise par la première unité d'émission (22) et ladite au moins une deuxième caractéristique de lumière (64) de la lumière (60) émise par ladite au moins une deuxième unité d'émission (24) sont conçues sous la forme d'un mélange de couleurs,
**caractérisé en ce que**
la première caractéristique de lumière (62) et ladite au moins une deuxième caractéristique de lumière (64) sont différentes,
une première couleur de lumière est utilisée uniquement en tant que partie de la première caractéristique de lumière (62), une deuxième couleur de lumière est utilisée uniquement en tant que partie de la deuxième caractéristique de lumière (64), et au moins une troisième couleur de lumière est utilisée en tant que partie des deux caractéristiques de lumière (62, 64).

2. Dispositif (10) selon la revendication 1,
**caractérisé en ce que**
la première couleur de lumière utilisée est le bleu, en particulier le bleu autour d'une valeur moyenne d'environ 470 nm, et/ou la deuxième couleur de lumière utilisée est le vert, en particulier le vert autour d'une valeur moyenne d'environ 540 nm, et/ou la troisième couleur de lumière utilisée est le rouge, en particulier le rouge autour d'une valeur moyenne d'environ 700 nm.

3. Dispositif (10) selon la revendication 1 ou 2,
**caractérisé en ce que**
on utilise comme couleur de lumière d'une lumière (60) une bande de longueurs d'onde autour d'une valeur moyenne, en particulier une bande de longueurs d'onde de ± 25 nm autour de la valeur moyenne, de préférence une bande de longueurs d'onde de ± 5 nm autour de la valeur moyenne, ou **en ce que** la lumière (60) est conçue comme une lumière laser monochromatique, et la couleur de lumière de la lumière (60) est déterminée par la lumière laser monochromatique.

4. Dispositif (10) selon les revendications 1 à 3,
**caractérisé en ce que**
la première section d'éclairage (52) et ladite au moins une deuxième section d'éclairage (54) recouvrent complètement ou au moins sensiblement complètement l'environnement à surveiller (50).

5. Dispositif (10) selon la revendication 4,
**caractérisé en ce que**
la première section d'éclairage (52) et ladite au moins une deuxième section d'éclairage (54) recouvrent l'environnement à surveiller (50) en parties égales ou au moins sensiblement égales, l'environnement à surveiller (50) recouvrant de préférence une plage angulaire de 120° × 40° dont la première section d'éclairage (52) et la deuxième section d'éclairage (54) recouvrent chacune 60° × 40°.

6. Dispositif (10) selon l'une des revendications précédentes,
**caractérisé en ce que**
la première section d'éclairage (52) et ladite au moins une deuxième section d'éclairage (54) ne se chevauchent pas, et/ou **en ce que** la première section d'éclairage (52) et ladite au moins une deuxième section d'éclairage (54) sont adjacentes l'une à l'autre, de préférence au moins partiellement directement adjacentes l'une à l'autre.

7. Dispositif (10) selon l'une des revendications précédentes 1 à 5,
**caractérisé en ce que**
la première section d'éclairage (52) et ladite au moins une deuxième section d'éclairage (54) se chevauchent dans une zone de redondance (56), en particulier, **en ce que** ladite au moins une deuxième section d'éclairage (54) se chevauche complètement avec la première section d'éclairage (52) et constitue ainsi la zone de redondance (56).

8. Dispositif (10) selon l'une des revendications précédentes,
**caractérisé en ce que**
la première section d'éclairage (52) est située à une première distance (70) de la section de réception (30), et ladite au moins une deuxième section d'éclairage (54) est située à une deuxième distance (72) de la section de réception (30), la première distance (70) et la deuxième distance (72) étant différentes.

9. Dispositif (10) selon l'une des revendications précédentes,
**caractérisé en ce que**
la première unité d'émission (22) et/ou ladite au moins une deuxième unité d'émission (24) sont conçues pour balayer et/ou éclairer à la manière d'un flash la section d'éclairage respective (52, 54).

10. Dispositif (10) selon l'une des revendications précédentes,
**caractérisé en ce que**
l'unité de réception (32) comporte une multitude de capteurs de lumière (36), les capteurs de lumière (36) étant en particulier disposés en une matrice de capteurs (34), de préférence sous forme de pixels de la matrice de capteurs (34), la matrice de capteurs (34) comportant de manière particulièrement préférée 600 × 200 capteurs de lumière (36) sous forme de pixels.

11. Dispositif (10) selon la revendication 10,
**caractérisé en ce que**
la multitude de capteurs de lumière (36) comprend un premier groupe de capteurs (38) et au moins un deuxième groupe de capteurs (40) au moins partiellement différent du premier, les capteurs de lumière (36) du premier groupe de capteurs (38) étant conçus pour recevoir de la lumière réfléchie (66) ayant la première caractéristique de lumière (62), et les capteurs de lumière (36) dudit au moins un deuxième groupe de capteurs (40) étant conçus pour recevoir de la lumière réfléchie (66) ayant la deuxième caractéristique de lumière (64).

12. Dispositif (10) selon la revendication 11,
**caractérisé en ce que**
dans la matrice de capteurs (34), les capteurs de lumière (36) du premier groupe de capteurs (38) et les capteurs de lumière (36) dudit au moins un deuxième groupe de capteurs (40) sont disposés en alternance.

13. Dispositif (10) selon l'une des revendications précédentes,
**caractérisé en ce que**
la section de réception (30) comprend une première unité d'imagerie (42), pourvue de préférence d'au moins une lentille, pour la reproduction optique et/ou la focalisation de la lumière (66), réfléchie à partir de la première section d'éclairage (52) de l'environnement à surveiller (50) et de ladite au moins une deuxième section d'éclairage (54) de l'environnement à surveiller (50), sur l'unité de réception (32), et/ou
**en ce que** la première unité d'émission (22) et/ou la deuxième unité d'émission (24) comprend une deuxième unité d'imagerie (44), pourvue de préférence d'au moins une lentille, pour la reproduction optique et/ou la focalisation de la lumière (60), émise par l'unité d'émission correspondante (22, 24) vers l'environnement à surveiller (50), sur la première section d'éclairage correspondante (52) et/ou sur au moins une deuxième section d'éclairage (54).

14. Dispositif (10) selon l'une des revendications précédentes,
**caractérisé en ce que**
la première unité d'émission (22) et/ou la deuxième unité d'émission (24) comprend une multitude d'émetteurs de lumière (28), les émetteurs de lumière (28) étant disposés en une matrice d'émetteurs (26), en particulier comme pixels de la matrice d'émetteurs (26), la matrice d'émetteurs (26) présentant de préférence 2 × 4 émetteurs de lumière (28) comme pixels ; et/ou l'unité de réception (32) est disposée entre la première unité d'émission (22) et ladite au moins une deuxième unité d'émission (24).

15. Véhicule (100) comportant un dispositif (10) pour détecter des objets (12) situés dans un environnement à surveiller (50),
**caractérisé en ce que**
le dispositif (10) est réalisé selon l'une des revendications précédentes.
